# EUROPÄISCHE PATENTSCHRIFT

(11) **EP 2 123 949 B1**
(45) Veröffentlichungstag und Bekanntmachung des Hinweises auf die Patenterteilung: **11.11.2015**
(21) Anmeldenummer: 09006814.9
(22) Anmeldetag: 20.05.2009
(51) Int. Cl.: F16J 15/02, A47K 3/00

(54) **Sanitärteil**
Sanitary element
Elément sanitaire

(30) Priorität: 21.05.2008 DE 102008024609
(43) Veröffentlichungstag der Anmeldung: 25.11.2009
(73) Patentinhaber: Artweger GmbH & Co., 4820 Bad Ischl (AT)
(72) Erfinder: Zierler, Wolfgang, 4820 Bad Ischl (AT); Soxberger, Josef, 4820 Bad Ischl (AT); Hofer, Andreas, 4822 Bad Goisern (AT)
(74) Vertreter: Jeck, Anton

(56) Entgegenhaltungen:
- DE-A- 1 769 476
- DE-A- 10 228 614
- DE-U-202004 002 241
- US-A- 4 829 730

## Beschreibung

### Technisches Gebiet:

Die Erfindung betrifft ein Sanitärteil gemäß dem Oberbegriff des Anspruchs 1.

### Stand der Technik:

Beim Einbau von Sanitärteilen, wie beispielsweise Duschwannen, Duschtassen, Badewannen, Whirlpools und dergleichen, muss eine wasserdichte Abdichtung zwischen Sanitärteil und Baukörper hergestellt werden. Sanitärteile weisen hierzu eine als Dichtfläche bezeichnete Fläche auf, mit der sie am Baukörper anliegen,

Zur Herstellung einer solchen Abdichtung werden gegenwärtig Dichtungen zwischen Dichtflächen von Sanitärteilen und entsprechenden Gegenflächen der Baukörper, wie etwa Wandteile, Paneele und dergleichen, entweder in pastöser Form auf die Dichtflächen aufgetragen, oder bei Anwendung von vorgefertigten Dichtungsprofilen aus beispielsweise Silikon-Elastomeren, thermoplastischen Elastomeren (TPE), thermoplastischen Polyurethan (PUR) -Elastomeren (TPU) oder dergleichen, in entsprechende Aufnahmenuten in der Dichtfläche eingeklebt.

Aus fertigungstechnischen Gründen ist es nicht möglich, solche Aufnahmenuten für die Dichtungen bereits bei der Herstellung der Sanitärteile einzuformen, da ansonsten schwer entformbare Hinterschnitte entstehen würden.

Bei nach den üblichen Herstellungsverfahren für Sanitärteile, wie beispielsweise Polyester-Handlaminierung, ungesättigtes Polyesterharz (UP) Glasfaserverbundwerkstoff (Glass Reinforced Plastics; GRP) Harzinjektionsverfahren (Resin Transfer Molding; RTM), Thermoformen mit nachfolgender UP GRP oder PUR Verstärkung, hergestellten Sanitärteilen müssen diese Aufnahmenuten deshalb nachträglich in die Dichtfläche eingefräst werden.

Dies führt einerseits zu einem zusätzlichen Arbeitsaufwand und andererseits besteht die Gefahr, dass beim Kleben in den Nuten Fehlstellen entstehen, bei denen Wasser über die Aufnahmenut in die Verstärkungsstruktur der Sanitärteile eindringt und infolge dessen zu Wasserschäden am Baukörper führt.

Darüber hinaus wird das Kleben dadurch erschwert, dass nur wenige Materialien geeignet sind, eine wasserabdichtende Klebeverbindung mit den gängigen Oberflächenmaterialien von Sanitärteilen, wie beispielsweise Email bzw. Emaille, UP Gelcoat, Acryl, einzugehen.

Durch DE 84 24 740 U1 ist eine Dichtung zwischen einer Dichtfläche eines Sanitärteils und einer entsprechenden Gegenfläche eines Baukörpers bekannt. Die Dichtung sieht ein baukörperseitig anzuordnendes Anschlusselement vor, das auf einer einem Rand des Sanitärteils zugewandten Seite mit einem elastischen Element versehen ist, das gegenüber dem Rand des Sanitärteils selbstklebend ausgeführt sein kann. Am Sanitärteil selbst sind keine besonderen Maßnahmen getroffen, lediglich der Rand des Sanitärteils wird in das elastische Element gedrückt. Nachträglich muss ein sich in einem Querschnitt konisch verjüngende Nut zwischen Sanitärteil und baukörperseitig angeordnetem Anschlussteil vom Nutgrund, an dem der Rand des Sanitärteils in das elastische Element drückt, bis zum Nutrand mit einer Isolier-masse wasserdicht verschlossen werden.

Ferner besteht eine Sanitäreinrichtung, wie beispielsweise eine Dusche und/oder eine Badewanne, häufig neben einem oben erwähnten Sanitärteil noch aus einer feststehenden und/oder beweglichen Seitenwand und/oder Tür, die beispielsweise als Spritzschutz dient, oder im Fall einer kombinierten Bade- und Duschvorrichtung, wie beispielsweise durch die DE 20 2005 021 683 U1 bekannt, sowohl als Spritzschutz im Fall einer Verwendung als Dusche, als auch als Auslaufschutz bzw. Badewannenwandung im Fall einer Verwendung als Badewanne. Auch hier ist eine wasserdichte Abdichtung zwischen einer der feststehenden oder beweglichen Seitenwand und/oder Tür zugewandten Dichtfläche des Sanitärteils und der feststehenden oder beweglichen Seitenwand und/oder Tür erwünscht bzw. erforderlich. Ähnlich verhält es sich bei z.B. aus DE 20 2007 009 656 U1 bekannten Badewannen mit Türeinstieg bzw. mit durch eine Tür verschließbarem abgesenkten Einstiegsbereich.

Auch zur Herstellung von Abdichtungen zwischen z.B. einer wannenseitig um einen abgesenkten Einstiegsbereich einer Wanne umlaufenden Dichtfläche und einer den abgesenkten Einstiegsbereich wasserdicht verschließenden, gegen die Dichtfläche anschlagenden Tür ist es bislang üblich, vorgefertigte Dichtungsprofile in entsprechende in die Dichtfläche eingefräste Aufnahmenuten z.B. mittels Silikonkleber einzukleben (siehe EP.A.1611827). Auch hier ist die Herstellung der Abdichtung mit den bereits oben erwähnten Nachteilen hoher Kosten verbunden, bedingt durch einen hohen Aufwand zur Herstellung und bei der Qualitätskontrolle und Nachbearbeitung der hergestellten Abdichtungen aufgrund der Gefahr, dass beim Kleben in den Nuten Fehlstellen entstehen bzw. entstanden sind.

Durch die DE 38 41 553 C2 ist bekannt, für einen Klebeanschluss von Kunststoff-dichtungsbahnen als Haftungsvermittler zwischen den Schichten Acrylharze oder Polyurethane zu verwenden.

Durch die DE 199 21 196 A1 ist eine Befestigungsvorrichtung bekannt, die mittels einer einen Acrylharzklebers aufweisenden Kleberschicht von einem Untergrund wiederablösbar ist.

Durch die DE 1 769 476 A1 ist ein UV-härtbarer Kleber auf Acrylbasis bekannt.

Durch die US 4,829 730 ist ein Formteil zur Abdeckung von Spalten zwischen einer horizontalen Arbeitsplatte und einer vertikalen Fläche bzw. Wand eines Baukörpers bekannt. Das Formteil besteht aus einer in ihrem Querschnitt L-förmigen Profilleiste mit jeweils der Arbeitsplatte und dem Baukörper zugewandten planen Flächen.

Durch die EP 0 446 776 A2 ist ein Dichtungsprofil zur Herstellung einer Abdichtung zwischen einem Fensterrahmen und einer dazugehörigen Fensterscheibe bekannt. Damit das Dichtungsprofil bei der Montage an dem Fensterrahmen sicher gehalten wird, kann ein doppelseitiges Klebeband über einen Teil der Höhe des Dichtungsprofils vorgesehen sein. Das Klebeband dient hierbei jedoch nur als Montagehilfe, und nicht zur Herstellung der Abdichtung.

Durch DE 102 28 614 A1 ist eine Dichtung zur Anordnung auf einer Dichtfläche bekannt. Die Dichtung umfasst ein Dichtungsprofil aus einem Elastomer. Bei dem Elastömer handelt es sich um Silikon. Das Dichtungsprofil weist eine in betriebsgemäßem Zustand der Dichtfläche zugewandte Rückseite auf. Auf der Rückseite ist eine Kleberschicht aufgebracht. Die Kleberschicht wird durch ein doppelseitiges Klebeband gebildet, das aus einem Trägerelement aus Acrylatschaum besteht, das auf seiner der Dichtung zugewandten Seite mit einem Silikonkleber versehen ist. Auf seiner der Dichtfläche zugewandten Seite ist das Trägerelement mit einem an die Eigenschaften der entsprechenden Dichtfläche angepassten Kleber versehen. Durch das doppelseitige Klebeband mit unterschiedlichen Klebern auf seinen der Dichtung und der Dichtfläche zugewandten Seiten werden einfach zu montierende, selbstklebende Silikondichtungen bereitgestellt.

Durch DE 20 2004 002 241 U1 ist eine Dichtleiste zum Abdichten eines Spalts zwischen zwei relativ zueinander bewegbaren Teilen, insbesondere des Spalts zwischen einer Fahrzeugtür und einer dieser zugeordneten Berandung einer Fahrzeugstruktur bekannt. Die Dichtleiste ist zur Anordnung auf einer Dichtfläche eines der beiden Teile vorgesehen. Die Dichtleiste kann ein Dichtungsprofil aus einem Elastomer umfassen. Die Dichtleiste weist eine der Dichtfläche zugewandte Rückseite auf, auf der eine Kleberschicht aufgebracht ist. Eine Abdeckfolie hält die Kleberschicht in einem aktivierbaren Zustand. Die Kleberschicht besteht aus Acrylschaum. Nach Entfernen der Abdeckfolie ist die Kleberschicht einsatzfähig.

### Technische Aufgabe der Erfindung:

Der Erfindung liegt daher die Aufgabe zugrunde, ein barrierefreies Sanitärteil zu entwickeln, welches kostengünstig herstellbar ist.

### Offenbarung der Erfindung und deren Vorteile:

Die Aufgabe wird gelöst durch ein Sanitärteil mit den Merkmalen des Anspruchs 1.

Eine Dichtung zur Anordnung auf einer Dichtfläche eines Sanitärteils umfasst demnach ein Dichtungsprofil aus einem Elastomer, welches Dichtungsprofil eine in betriebsgemäßem Zustand bzw. eine in betriebsgemäßer Anordnung der Dichtfläche des Sanitärteils zugewandte Rückseite aufweist. Auf dieser Rückseite ist eine Kleberschicht aufgebracht, zur nutfreien Anordnung des Dichtungsprofils auf der Dichtfläche des Sanitärteils.

Sich hieraus ergebende Vorteile sind unter anderem, dass durch Anordnung einer Kleberschicht auf der Rückseite des Dichtungsprofils eine zuverlässige, wasserabdichtende Klebeverbindung zwischen Dichtfläche des Sanitärteils und dem Dichtungsprofil hergestellt werden kann. Diese Klebeverbindung benötigt keine Aufnahmenut, in der Undichtigkeiten sowohl bei der Herstellung, als auch im Betrieb entstehen und unerkannt bleiben können.

Bei dem Sanitärteil handelt es sich um eine Wanne mit einem mittels einer Tür wasserdicht verschließbaren, abgesenkten Einstiegsbereich, wobei die Dichtfläche wannenseitig um den Einstiegsbereich umlaufend angeordnet ist. Ein typisches Beispiel für eine solche Wanne ist eine begehbare, barrierefreie Badewanne bzw. kombinierte Bade- Duschvorrichtung, wie sie z.B. durch die DE 20 2005 021 683 U1 bekannt ist. Durch Verwendung der erwähnten Dichtung zur Abdichtung zwischen einer um einen abgesenkten Einstiegsbereich einer Wanne wannenseitig umlaufenden Dichtfläche und einer den abgesenkten Einstiegsbereich wasserdicht verschließenden, gegen die Dichtfläche anschlagenden Tür kann auch in diesem Bereich auf bisher durch Einfräsen von Nuten und Einkleben mit Silikonkleber angeordnete Dichtungen verzichtet werden, wodurch die Kosten im Herstellungsprozess solcher begehbarer, barrierefreier Wannen gegenüber dem Stand der Technik ohne Einschränkung der Dichtwirkung erheblich gesenkt werden.

Die Kleberschicht besteht aus einem UV-härtbaren Acrylharz, oder die Kleberschicht umfasst vorzugsweise zumindest ein solches UV-härtbares Acrylharz. Das Acrylharz geht eine zuverlässige, wasserdichte Klebeverbindung mit dem Oberflächenmaterial des Sanitärteils ein. Durch die Verwendung eines UV-härtbaren Acrylharzes wird darüber hinaus ein schnelles Aushärten der Kleberschicht erreicht, wodurch der Herstellungsprozess vereinfacht und beschleunigt wird. Hierdurch wird die Verwendung eines Acrylharzes erst ermöglicht, da ein Acrylharz ansonsten aufgrund seiner ohne UV-Härtung längeren Topfzeit ein langes Halten der Dichtung bzw. des Dichtungsprofils an Ort und Stelle bis zum vollständigen Aushärten der Klebeverbindung erfordern würde, was den Herstellungsprozess von mit Dichtungen ausgestatteten Sanitärteilen bei einer Serienfertigung sehr verlangsamen würde.

Besonders bevorzugt umfasst die Kleberschicht einen geschäumten, geschlossenzelligen Acrylat-Klebstoffkern. Der Klebstoff der Kleberschicht ist hierbei vorzugsweise in den geschäumten, geschlossenzelligen Acrylat-Klebstoffkern eingesetzt. Der geschäumte, geschlossenzellige Acrylat-Klebstoffkern bildet mit der Kleberschicht eine homogene Einheit. Dieser Aufbau verleiht der Kleberschicht viskoelastische Eigenschaften, wodurch die Kleberschicht in alle Lücken und Vertiefungen der Dichtfläche fließt und einen vollständigen und vollflächigen Kontakt zwischen Dichtungsprofil und Dichtfläche schafft. Dadurch werden noch höhere Haftungswerte zwischen dem Dichtungsprofil und der Dichtfläche des Sanitärteils erreicht, als sie z.B. bei Verwendung einer Kleberschicht aus UV-härtbarem Acrylharz bzw. nur aus einem UV-härtbaren Acrylharz erreicht werden können.

Vorzugsweise beträgt die Breite der Kleberschicht am Dichtungsprofil mindestens 8 mm.

Die Wandstärke einer Wandung des Dichtungsprofils beträgt vorzugsweise mindestens 12% der Breite der Kleberschicht.

Die Wandstärke einer Wandung des Dichtungsprofils beträgt vorzugsweise mindestens 7% der Höhe des Dichtungsprofils.

Eine vorteilhafte Ausgestaltung der Dichtung sieht vor, dass das Dichtungsprofil einen Querschnitt mit einer Grundgeometrie in Form eines geschlossenen Kurvenzuges mit einer planen Fläche aufweist.

Dabei bildet vorzugsweise die im Querschnitt plane Fläche die Rückseite des Dichtungsprofils.

Der im Querschnitt geschlossene Kurvenzug wird vorzugsweise von einer Wandung des Dichtungsprofils gebildet, die einen im Querschnitt im Inneren des Dichtungsprofils liegenden Hohlraum umschließt.

Gemäß einer besonders vorteilhaften Ausgestaltung der Dichtung ist vorgesehen, dass das Dichtungsprofil eine zusätzliche Dichtlippe aufweist. Durch Ausgestaltung des Dichtungsprofils mit einer zusätzlichen Dichtlippe wird ins besondere bei einer starken Krümmung der Dichtung eine noch wesentlich bessere Abdichtung erzielt, als bei einer Ausführung ohne Dichtlippe.

Die Dichtlippe ist vorzugsweise 5 bis 10 mm lang.

Die Dichtlippe schließt in ihrem Ursprung an derjenigen Stelle, an dem die Dichtlippe im Querschnitt des Dichtungsprofils betrachtet von dem geschlossenen Kurvenzug divergierend abgeht, vorzugsweise einen Winkel von 30° bis 60° mit der Tangente des geschlossenen Kurvenzuges einschließt.

Besonders bevorzugt verjüngt sich die den im Querschnitt geschlossenen Kurvenzug bildende Wandung des Dichtungsprofils, die einen im Querschnitt im Inneren des Dichtungsprofils liegenden Hohlraum umschließt, in derjenigen Richtung in Verlängerung der Dichtlippe, in der die Dichtlippe von ihrem freien Ende aus betrachtet zum geschlossenen Kurvenzug hin konvergiert.

Die Wandung kann sich beispielsweise um das 0,5 bis 0,8 fache verjüngen.

Gemäß einer vorteilhaften Ausgestaltung der erfindungsgemäßen Dichtung weist das Elastomer des Dichtungsprofils eine Shore Härte zwischen 50 und 70 Shore A auf.

Die Rückseite des Dichtungsprofils ist vorzugsweise mit einer Oberflächenbehandlung versehen, auf der die Kleberschicht vorzugsweise aus UV-härtbarem Acrylharz und/oder aus einem geschäumten, geschlossenzelligen Acrylat-Klebstoffkern aufgebracht ist. Eine derartige Oberflächenbehandlung umfasst beispielsweise das Aufbringen einer Zwischenschicht aus einem Material, das sowohl mit dem Elastomer des Dichtungsprofils, als auch mit der Kleberschicht eine gut haftende bzw. haltende bzw. eine belastbare Verbindung eingeht. Das Aufbringen kann durch gängige Verfahren wie beispielsweise Tauchen, Bedampfen und dergleichen erfolgen. Ebenso kann die Oberflächenbehandlung ein Aufrauen der Rückseite umfassen.

Besonders bevorzugt sieht die Oberflächenbehandlung eine Gasvorbehandlung und/oder Beflammung vor.

Bei der Dichtfläche handelt es sich um eine Dichtfläche zwischen dem Sanitärteil und einer festen oder beweglichen Tür.

Vorzugsweise öffnet die Tür nach innen in die Wanne hinein, so dass sie bei vorhandenem Wasserpegel im Inneren bzw. in der Wanne gegen die Dichtfläche gepresst wird.

Die Tür kann eine einteilige, in ihrer Höhe über den Wannenrand reichende Duschtür sein.

Besonders bevorzugt weist das Dichtungsprofil einen sich entlang des Dichtungsprofils erstreckenden Dehnsicherungsfaden auf, der in betriebsgemäßem Zustand entlang der Dichtfläche verläuft.

Die Erfindung wird nachfolgend anhand eines in den Zeichnungen dargestellten Ausführungsbeispiels näher erläutert. Es zeigen:
- Fig. 1: eine schematische Darstellung eines ersten Ausführungsbeispiels einer Dichtung in einem Querschnitt.
- Fig. 2: die Dichtung aus Fig. 1 mit Kennzeichnung wichtiger Abmessungen.
- Fig. 3: eine schematische Darstellung eines zweiten Ausführungsbeispiels einer Dichtung in einem Querschnitt und
- Fig. 4: eine perspektivische Ansicht einer Badewanne.

### Wege zur Ausführung der Erfindung:

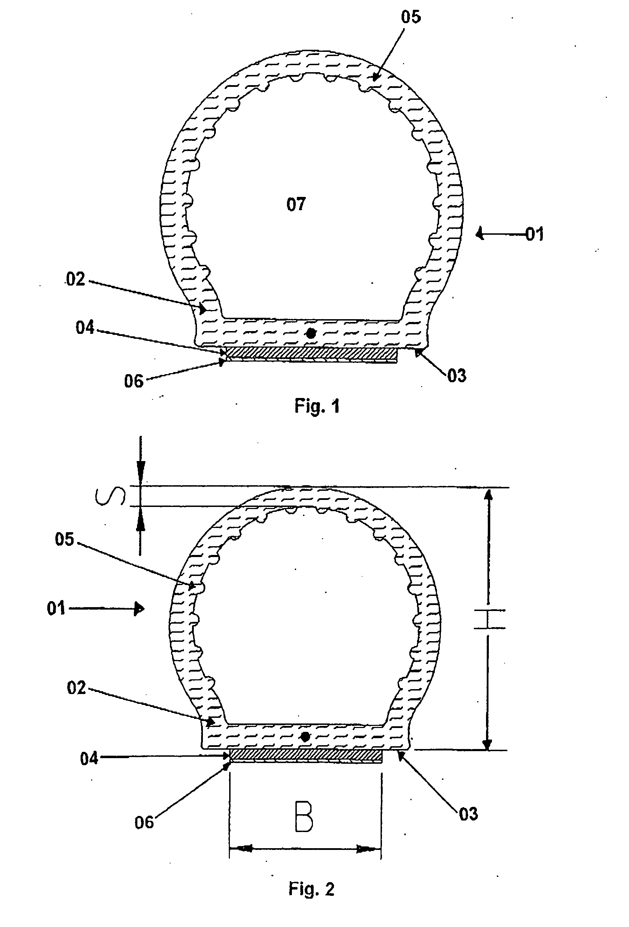

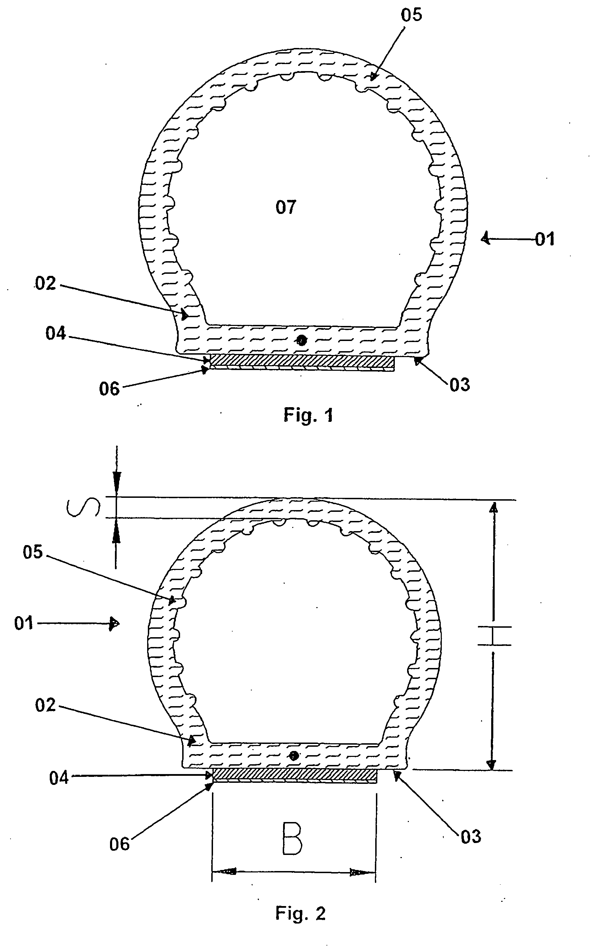

Die in der Figur gleichen Bezugsziffern bezeichnen gleiche oder gleich wirkende Elemente. Eine in Fig. 1 dargestellte, beispielsweise zur Anordnung auf einer Dichtfläche zwischen einem Sanitärteil und einem Baukörper vorgesehene Dichtung 01 umfasst ein Dichtungsprofil 02 aus einem Elastomer. Das Dichtungsprofil 02 weist eine in betriebsgemäßem Zustand bzw. eine in betriebsgemäßer Anordnung der Dichtfläche des Sanitärteils zugewandte Rückseite 03 auf. Auf dieser Rückseite 03 ist eine Kleberschicht 04 aus einem UV-härtbaren Acrylharz aufgebracht. Die Kleberschicht erlaubt eine nutfreie Anordnung des Dichtungsprofils 02 auf der Dichtfläche des Sanitärteils. Zum Schutz der Kleberschicht 04 während des Transports und der Lagerung der Dichtung 01 kann eine abziehbare Abdeckfolie 06 auf der Kleberschicht 04 angeordnet sein, welche vorzugsweise erst unmittelbar vor dem Aufbringen der Dichtung 01 auf der Dichtfläche eines Sanitärteils entfernt wird.

Das Dichtungsprofil 02 weist einen Querschnitt mit einer Grundgeometrie in Form eines geschlossenen Kurvenzuges mit einer planen Fläche auf, welche vorzugsweise die Rückseite 03 des Dichtungsprofils 02 bildet. Der im Querschnitt geschlossene Kurvenzug wird vorzugsweise von einer Wandung 05 des Dichtungsprofils 02 gebildet, die einen im Querschnitt innen liegenden Hohlraum 07 des Dichtungsprofils 02 umschließt.

Die Kleberschicht 04 weist auf den gängigen Oberflächen von Sanitärteilen, welche typischerweise aus Emaille bzw. Email, UP Gelcoat oder Acryl bestehen, eine hohe Haftung auf.

Die Rückseite 03 des Dichtungsprofils 02 ist vorzugsweise mit einer Oberflächenbehandlung bzw. Oberflächenvorbehandlung versehen, auf der die Kleberschicht 04 aus UV-härtbaren Acrylharz aufgebracht ist. Eine derartige Oberflächenbehandlung bzw. Oberflächenvorbehandlung umfasst beispielsweise das Aufbringen einer Zwischenschicht aus einem Material, das sowohl mit dem Elastomer des Dichtungsprofils 02, als auch mit der Kleberschicht 04 eine gut haftende bzw. haltende bzw. eine belastbare Verbindung eingeht. Das Aufbringen kann durch gängige Verfahren wie beispielsweise Tauchen, Bedampfen und dergleichen erfolgen. Ebenso kann die Oberflächenbehandlung bzw. Oberflächenvorbehandlung ein Aufrauen der Rückseite 03 umfassen.

Durch die spezielle Oberflächenvorbehandlung ist es möglich, auch zu normalerweise extrem schwer verklebbaren Dichtungswerkstoffen, wie etwa Silikon-Elastomere, TPE, TPU oder anderen, eine hohe Haftung der Kleberschicht zu erhalten.

Die Dichtung erlaubt es, ein Dichtungsprofil 02 direkt auf eine Dichtfläche eines Sanitärteils aufzubringen.

Damit mit der Dichtung 01 eine gewünschte wasserdichte Abdichtung zwischen Sanitärteil und Baukörper hergestellt werden kann, weist ein vorzugsweise für die Dichtung 01 verwendetes Dichtungsprofil 02 vorzugsweise bestimmte in Fig. 2 gezeigte geometrische Voraussetzungen auf. Diese geometrischen Voraussetzungen umfassen beispielsweise eine bestimmte Profilgeometrie, eine bestimmte Breite B der Klebefläche der Kleberschicht 04, eine bestimmte Wandstärke S einer Wandung 05 des Dichtungsprofils 02 im Verhältnis zur Breite B der Klebefläche der Kleberschicht 04 und zur Höhe H des Dichtungsprofils 02. Vorzugsweise beträgt die Breite B der Klebefläche bzw. der Kleberschicht 04 mindestens 8 mm. Die Wandstärke S einer Wandung 05 des Dichtungsprofils 02 beträgt vorzugsweise mindestens 12% der Breite B der Kleberschicht 04. Die Wandstärke S einer Wandung 05 des Dichtungsprofils 02 beträgt vorzugsweise mindestens 7% der Höhe H des Dichtungsprofils 02.

Genauso ist die Weichheit des für das Dichtungsprofil 02 verwendeten Materials bzw. Elastomers vorzugsweise in Abhängigkeit von der Wandstärke S eingestellt, da ansonsten die Gefahr besteht, dass die notwendigen Radien beim Aufbringen der Dichtung 01 auf die Dichtfläche eines Sanitärteils nicht geformt werden könnten. Vorzugsweise liegt die Weichheit des Materials in einem Bereich zwischen 50 und 70 Shore A.

Eine in Fig. 3 dargestellte, beispielsweise zur Anordnung auf einer Dichtfläche zwischen einem Sanitärteil und einer festen und/oder beweglichen Seitenwand oder Tür vorgesehene Dichtung 01 umfasst ebenso ein Dichtungsprofil 02 z.B. aus einem Elastomer. Das Dichtungsprofil 02 weist eine in betriebsgemäßem Zustand bzw. eine in betriebsgemäßer Anordnung der Dichtfläche des Sanitärteils zugewandte Rückseite 03 auf. Auf dieser Rückseite 03 ist eine Kleberschicht 04 aufgebracht. Die Kleberschicht 04 umfasst einen geschäumten, geschlossenzelligen Acrylat-Klebstoffkern 08. Der Klebstoff der Kleberschicht 04 ist hierbei vorzugsweise in den geschäumten, geschlossenzelligen Acrylat-Klebstoffkern 08 eingesetzt. Der geschäumte, geschlossenzellige Acrylat-Klebstoffkern 08 bildet mit der Kleberschicht 04 eine homogene Einheit. Dieser Aufbau verleiht der Kleberschicht 04 viskoelastische Eigenschaften, wodurch die Kleberschicht 04 in alle Lücken und Vertiefungen der Dichtfläche fließt und einen vollständigen und vollflächigen Kontakt zwischen Dichtungsprofil 02 und Dichtfläche schafft. Die Kleberschicht 04 erlaubt auch bei der in Fig. 3 dargestellten Dichtung 01 eine nutfreie Anordnung des Dichtungsprofils 02 auf der Dichtfläche des Sanitärteils. Zum Schutz der Kleberschicht 04 während des Transports und der Lagerung der Dichtung 01 kann wiederum eine in Fig. 3 nicht dargestellte, abziehbare Abdeckfolie auf der Kleberschicht 04 angeordnet sein, welche vorzugsweise erst unmittelbar vor dem Aufbringen der Dichtung 01 auf der Dichtfläche eines Sanitärteils entfernt wird.

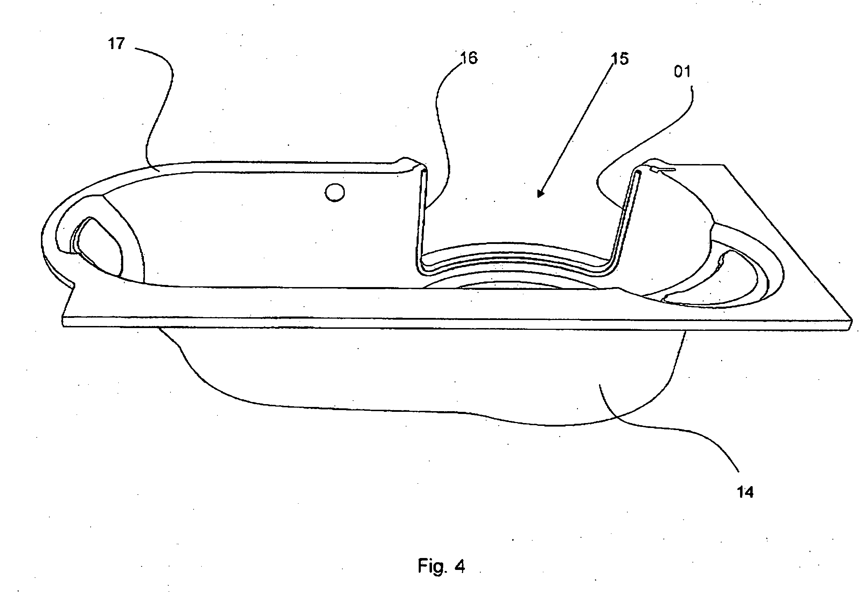

Bei dem Sanitärteil handelt es sich um eine in Fig. 4 dargestellte Wanne 14 einer begehbaren, barrierefreien Badewanne bzw. kombinierten Bade- Duschvorrichtung mit einem mittels einer Tür wasserdicht verschließbaren, abgesenkten Einstiegsbereich 15, wobei die Dichtfläche 16 wannenseitig um den Einstiegsbereich 15 umlaufend angeordnet ist.

Das Dichtungsprofil 02 der in Fig. 3 dargestellten Dichtung 01 weist ebenso wie das Dichtungsprofil 02 der in Fig. 1 dargestellten Dichtung 01 einen Querschnitt mit einer Grundgeometrie in Form eines geschlossenen Kurvenzuges mit einer planen Fläche auf, welche vorzugsweise die Rückseite 03 des Dichtungsprofils 02 bildet. Der im Querschnitt geschlossene Kurvenzug wird auch bei der in Fig. 3 dargestellten Dichtung 01 vorzugsweise von einer Wandung 05 des Dichtungsprofils 02 gebildet, die einen im Querschnitt innen liegenden Hohlraum 07 des Dichtungsprofils 02 umschließt.

Im Unterschied zu der in Fig. 1 dargestellten Dichtung 01 weist das Dichtungsprofil 02 der in Fig. 3 dargestellten Dichtung 01 jedoch eine zusätzliche Dichtlippe 09 auf. Die Dichtlippe 09 kann beispielsweise 5 bis 10 mm lang sein und in ihrem Ursprung 10 an derjenigen Stelle, an dem die Dichtlippe 09 im Querschnitt des Dichtungsprofils 02 betrachtet von dem geschlossenen Kurvenzug divergierend abgeht, einen Winkel von beispielsweise 30° bis 60° mit der Tangente des geschlossenen Kurvenzuges einschließen. Besonders bevorzugt verläuft die Tangente im Ursprung 10 der Dichtlippe 09 parallel zur Rückseite 03 des Dichtungsprofils 02. Im in Fig. 3 dargestellten Ausführungsbeispiel schließt die Dichtlippe 09 mit der Rückseite 03 des Dichtungsprofils 02 einen Winkel von 49° ein und ist 5,2 mm lang.

Die den im Querschnitt geschlossenen Kurvenzug bildende und den im Querschnitt im Inneren des Dichtungsprofils 02 liegenden Hohlraum 07 umschließende Wandung 05 des Dichtungsprofils 02 kann sich wie in Fig. 3 dargestellt, in derjenigen Richtung in Verlängerung der Dichtlippe 09 verjüngen, in der die Dichtlippe 09 von ihrem freien Ende 11 aus betrachtet zum geschlossenen Kurvenzug hin konvergiert. Die Wandung 05 verjüngt sich in der beschriebenen Richtung von der Partie 12 kommend zu der Partie 13 hin beispielsweise um das 0,5 bis 0,8 fache.

Das Dichtungsprofil 02 der in Fig. 3 dargestellten Dichtung weist besonders bevorzugt einen sich entlang des Dichtungsprofils 02 erstreckenden Dehnsicherungsfaden 18 auf, der in betriebsgemäßem Zustand entlang der Dichtfläche 16 verläuft.

Wichtig ist hervorzuheben, dass insbesondere eine in Fig. 3 dargestellte Dichtung besonders bevorzugt zur Herstellung einer Abdichtung zwischen einem Sanitärteil und einer Türe verwendet wird. Bei dem Sanitärteil handelt es sich um eine beispielsweise in Fig. 4 dargestellte Wanne 14 mit einem mittels der Tür wasserdicht verschließbaren, abgesenkten Einstiegsbereich 15, wobei die Dichtfläche 16 wannenseitig um den Einstiegsbereich 15 umlaufend angeordnet ist. Ein typisches Beispiel für eine solche Wanne 14 ist eine begehbare, barrierefreie Badewanne bzw. kombinierte Bade- Duschvorrichtung. Die Tür öffnet dabei vorzugsweise nach innen in die Wanne 14 hinein, so dass sie bei vorhandenem Wasserpegel im Inneren bzw. in der Wanne 14 gegen die Dichtfläche 16 gepresst wird. Die Tür kann eine einteilige, in ihrer Höhe über den Wannenrand 17 reichende Duschtür sein. Auf der Dichtfläche 16 der Wanne 14 ist eine Dichtung 01, beispielsweise eine in den Fig. 1 und 2 dargestellte Dichtung 01, oder eine in Fig. 3 dargestellte Dichtung 01 angeordnet.

### Gewerbliche Anwendbarkeit:

Die Erfindung ist insbesondere im Bereich der Herstellung und Installation von Sanitäreinrichtungen gewerblich anwendbar.

### Bezugszahlenliste

- 01: Dichtung
- 02: Dichtungsprofil
- 03: Rückseite
- 04: Kleberschicht
- 05: Wandung
- 06: Abdeckfolie
- 07: Hohlraum
- 08: Klebstoffkern
- 09: Dichtlippe
- 10: Ursprung
- 11: freies Ende der Dichtlippe
- 12: Partie der den geschlossenen Kurvenzug bildenden Wandung
- 13: Gegenüber der Partie 12 verjüngte Partie der den geschlossenen Kurvenzug bildenden Wandung
- 14: Wanne
- 15: Einstiegsbereich
- 16: Dichtfläche
- 17: Wannenrand
- 18: Dehnsicherungsfaden

- B: Breite der Kleberschicht bzw. Breite der Klebefläche
- H: Höhe des Dichtungsprofils
- S: Wandstärke des Dichtungsprofils

## Patentansprüche

1. Sanitärteil (14), welches als eine Wanne (14) mit einem mittels einer Tür wasserdicht verschließbaren, abgesenkten Einstiegsbereich (15) mit einer wannenseitig um den Einstiegsbereich (15) umlaufend angeordneten Dichtfläche (16) zwischen dem Sanitärteil (14) und der festen oder beweglichen Tür ausgeführt ist, auf welcher Dichtfläche eine Dichtung (01) angeordnet ist, **dadurch gekennzeichnet daß**
- die Dichtung nutfrei angeordnet ist,
- die Dichtung (01) ein Dichtungsprofil (02) aus einem Elastomer umfasst, welches Dichtungsprofil (02) eine in betriebsgemäßem Zustand der Dichtfläche (16) zugewandte Rückseite (03) aufweist, auf der eine Kleberschicht (04) aufgebracht ist, und
- die Kleberschicht (04) ein UV-härtbares Acrylharz umfasst.

2. Sanitärteil nach Anspruch 1,
**dadurch gekennzeichnet,**
**dass** die Kleberschicht (04) einen geschäumten, geschlossenzelligen Acrylat-Klebstoffkern (08) umfasst.

3. Sanitärteil nach Anspruch 1 oder 2
**dadurch gekennzeichnet,**
**dass** die Breite (B) der Kleberschicht (04) am Dichtungsprofil (02) mindestens 8 mm beträgt.

4. Sanitärteil nach einem der vorhergehenden Ansprüche,
**dadurch gekennzeichnet,**
**dass** die Wandstärke (S) einer Wandung (05) des Dichtungsprofils (02) mindestens 12% der Breite (B) der Kleberschicht (04) beträgt.

5. Sanitärteil nach einem der vorhergehenden Ansprüche,
**dadurch gekennzeichnet,**
**dass** die Wandstärke (S) einer Wandung (05) des Dichtungsprofils (02) mindestens 7% der Höhe (H) des Dichtungsprofils (02) beträgt.

6. Sanitärteil nach einem der vorhergehenden Ansprüche,
**dadurch gekennzeichnet,**
**dass** das Dichtungsprofil (02) einen Querschnitt mit einer Grundgeometrie in Form eines geschlossenen Kurvenzuges mit einer planen Fläche (03) aufweist.

7. Sanitärteil nach Anspruch 6,
**dadurch gekennzeichnet,**
**dass** die im Querschnitt plane Fläche die Rückseite (03) des Dichtungsprofils (02) bildet.

8. Sanitärteil nach Anspruch 6 oder 7,
**dadurch gekennzeichnet,**
**dass** der im Querschnitt geschlossene Kurvenzug von einer Wandung (05) des Dichtungsprofils (02) gebildet wird, die einen im Querschnitt im Inneren des Dichtungsprofils (02) liegenden Hohlraum (07) umschließt.

9. Sanitärteil nach Anspruch 6, 7 oder 8,
**dadurch gekennzeichnet,**
**dass** das Dichtungsprofil (02) eine zusätzliche Dichtlippe (09) aufweist.

10. Sanitärteil nach Anspruch 9,
**dadurch gekennzeichnet,**
**dass** die Dichtlippe (09) 5 bis 10 mm lang ist.

11. Sanitärteil nach Anspruch 9 oder 10,
**dadurch gekennzeichnet,**
**dass** die Dichtlippe (09) in ihrem Ursprung (10) einen Winkel von 30° bis 60° mit der Tangente des geschlossenen Kurvenzuges einschließt.

12. Sanitärteil nach einem der Ansprüche 9, 10 oder 11,
**dadurch gekennzeichnet,**
**dass** der im Querschnitt geschlossene Kurvenzug von einer Wandung (05) des Dichtungsprofils (02) gebildet wird, die einen im Querschnitt im Inneren des Dichtungsprofils (02) liegenden Hohlraum (07) umschließt, wobei sich die Wandung (05) des Dichtungsprofils (02) in derjenigen Richtung in Verlängerung der Dichtlippe (09) verjüngt, in der die Dichtlippe (09) von ihrem freien Ende (10) aus betrachtet zum geschlossenen Kurvenzug hin konvergiert.

13. Sanitärteil nach Anspruch 12,
**dadurch gekennzeichnet,**
**dass** sich die Wandung (05) um das 0,5 bis 0,8 fache verjüngt.

14. Sanitärteil nach einem der vorhergehenden Ansprüche,
**dadurch gekennzeichnet,**
**dass** das Elastomer des Dichtungsprofils (02) eine Shore Härte zwischen 50 und 70 Shore A aufweist.

15. Sanitärteil nach einem der vorhergehenden Ansprüche,
**dadurch gekennzeichnet,**
**dass** die Rückseite (03) des Dichtungsprofils (02) mit einer Oberflächenbehandlung versehen ist, auf der die Kleberschicht (04) aufgebracht ist.

16. Sanitärteil nach Anspruch 15,
**dadurch gekennzeichnet,**
**dass** die Oberflächenbehandlung eine Gasvorbehandlung und/oder Beflammung umfasst.

17. Sanitärteil nach einem der vorhergehenden Ansprüche,
**dadurch gekennzeichnet,**
**dass** die Tür nach innen in die Wanne (14) hinein öffnet so dass sie bei vorhandenem Wasserpegel in der Wanne (14) gegen die Dichtfläche (16) gepresst wird.

18. Sanitärteil nach einem der vorhergehenden Ansprüche,
**dadurch gekennzeichnet,**
**dass** die Tür eine einteilige, in ihrer Höhe über den Wannenrand (17) reichende Duschtür ist.

19. Sanitärteil nach einem der vorhergehenden Ansprüche,
**dadurch gekennzeichnet,**
**dass** das Dichtungsprofil (02) einen sich entlang des Dichtungsprofils (02) erstreckenden Dehnsicherungsfaden (18) aufweist.

## Claims

1. A sanitary part (14), which is designed as a tub (14) with a lowered entrance area (15) sealable waterproof by means of a door with a sealing surface (16) arranged circumferentially about the entrance area (15) on the tub side between the sanitary part (14) and the fixed or movable door, on which sealing surface a seal (01) is arranged **characterized in that**
- the seal is arranged without a groove,
- the seal (01) comprises a seal profile (02) made of an elastomer, which seal profile (02) has a rear side (03) facing the seal surface (16) in the proper operational state, on which an adhesive layer (04) is applied, and
- the adhesive layer (04) comprises a UV-curable acrylic resin.

2. A sanitary part according to claim 1,
**characterized in**
**that** the adhesive layer (04) comprises a foamed, closed-cell acrylate adhesive core (08).

3. A sanitary part according to claim 1 or 2
**characterized in**
**that** the width (B) of the adhesive layer (04) on the seal profile (02) is at least 8 mm.

4. A sanitary part according to one of the preceding claims,
**characterized in**
**that** the wall thickness (S) of the wall (05) of the seal profile (02) is at least 12% of the width (B) of the adhesive layer (04).

5. A sanitary part according to one of the preceding claims,
**characterized in**
**that** the wall thickness (S) of a wall (05) of the seal profile (02) is at least 7% of the height (H) of the seal profile (02).

6. A sanitary part according to one of the preceding claims,
**characterized in**
**that** the seal profile (02) has a cross- section with a basic geometry in the form of a closed curved line with a planar surface (03).

7. A sanitary part according to claim 6
**characterized in**
**that** the planar surface in the cross-section forms the rear side (03) of the seal profile (02).

8. A sanitary part according to claim 6 or 7,
**characterized in**
**that** the closed curved line in the cross-section is formed by a wall (05) of the seal profile (02), which encloses a hollow space (07) located in the cross-section in the interior of the seal profile (02).

9. A sanitary part according to claim 6, 7 or 8,
**characterized in**
**that** the seal profile (02) has an additional sealing lip (09).

10. A sanitary part according to claim 9,
**characterized in**
**that** the sealing lip (09) is 5 to 10 mm long.

11. A sanitary part according to claim 9 or 10,
**characterized In**
**that** the sealing lip (09) in its origin (10) encloses an angle of 30° to 60° with the tangent of the closed curved line.

12. A sanitary part according to one of claims 9, 10 or 11,
**characterized in**
**that** the closed curved line in the cross-section Is formed by a wall (05) of the seal profile (02), which encloses a hollow space (07) located in the cross-section in the interior of the seal profile (02), wherein the wall (05) of the seal profile (02) tapers In that direction in extension of the sealing lip (09), in which the sealing lip (09) viewed from its free end (10) converges towards the closed curved line.

13. A sanitary part according to claim 12,
**characterized in**
**that** the wall (05) tapers by 0.5 to 0.8 fold.

14. A sanitary part according to one of the preceding claims,
**characterized in**
**that** the elastomer of the seal profile (02) has a Shore hardness between 50 and 70 Shore A.

15. A sanitary part according to one of the preceding claims,
**characterized in**
**that** the rear side (03) of the seal profile (02) is provided with a surface treatment, on which the adhesive layer (04) is applied.

16. A sanitary part according to claim 15,
**characterized in**
**that** the surface treatment comprises a gas pre-treatment and/or flame treatment.

17. A sanitary part according to one of the preceding claims,
**characterized In**
**that** the door is opened inwards into the tub (14), so that it is pressed at the existing water level in the tub (14) against the sealing surface (16).

18. A sanitary part according to one of the preceding claims,
**characterized in**
**that** the door is a one-piece shower door reaching in its height over the tub edge (17).

19. A sanitary part according to one of the preceding claims,
**characterized in**
**that** the seal profile (02) has an extensible safety thread (18) extending along the seal profile (02).

## Revendications

1. Élément sanitaire (14), qui est réalisé sous la forme d'une baignoire (14) comportant une zone d'entrée (15) en creux, fermable de manière étanche à l'eau par une porte et munie d'une surface d'étanchéité (16), disposée du côté de la baignoire autour de la zone d'entrée (15) entre l'élément sanitaire (14) et la porte fixe ou mobile, sur laquelle surface d'étanchéité est posé un joint d'étanchéité (01), **caractérisé en ce que**
- le joint d'étanchéité est disposé sans rainure,
- le joint d'étanchéité (01) comporte un profilé d'étanchéité (02) en élastomère, lequel profilé d' étanchéité (02) comporte une face arrière (03) qui, dans la position en service, est orientée vers la surface d'étanchéité (16) et sur laquelle est appliquée une couche de colle (04), et
- ladite couche de colle (04) comporte une résine acrylique durcissable aux UV.

2. Élément sanitaire selon la revendication 1, **caractérisé en ce que** la couche de colle (04) comporte un noyau de colle d'acrylate (08) expansé, à pores fermés.

3. Élément sanitaire selon la revendication 1 ou 2, **caractérisé en ce que** la largeur (B) de la couche de colle (04) sur le profilé d'étanchéité (02) mesure au moins 8 mm.

4. Élément sanitaire selon l'une quelconque des revendications précédentes, **caractérisé en ce que** l'épaisseur (S) d'une paroi (05) du profilé d'étanchéité (02) mesure au moins 12 % de la largeur (B) de la couche de colle (04).

5. Élément sanitaire selon l'une quelconque des revendications précédentes, **caractérisé en ce que** l'épaisseur (S) d'une paroi (05) du profilé d'étanchéité (02) mesure au moins 7 % de la hauteur (H) du profilé d'étanchéité (02).

6. Élément sanitaire selon l'une quelconque des revendications précédentes, **caractérisé en ce que** le profilé d'étanchéité (02) a une section transversale avec une géométrie de base sous la forme d'un tracé en courbe fermée avec une surface plane (03).

7. Élément sanitaire selon la revendication 6, **caractérisé en ce que** la surface plane de la section transversale forme la face arrière (03) du profilé d'étanchéité (02).

8. Élément sanitaire selon la revendication 6 ou 7, **caractérisé en ce que** le tracé en courbe fermée de la section transversale est formé par une paroi (05) du profilé d'étanchéité (02), laquelle entoure une cavité (07) située à l'intérieur du profilé d'étanchéité (02) par référence à une coupe transversale.

9. Élément sanitaire selon la revendication 6, 7 ou 8, **caractérisé en ce que** le profilé d'étanchéité (02) comporte une lèvre d'étanchéité (09) supplémentaire.

10. Élément sanitaire selon la revendication 9, **caractérisé en ce que** la lèvre d'étanchéité (09) a une longueur de 5 à 10 mm.

11. Élément sanitaire selon la revendication 9 ou 10, **caractérisé en ce que** la lèvre d'étanchéité (09) au niveau de son origine (10) forme un angle de 30° à 60° avec la tangente du tracé en courbe fermée.

12. Élément sanitaire selon la revendication 9, 10 ou 11, **caractérisé en ce que** le tracé en courbe fermée de la section transversale est formé par une paroi (05) du profilé d'étanchéité (02), laquelle entoure une cavité (07) située à l'intérieur du profilé d'étanchéité (02) par référence à une coupe transversale, ladite paroi (05) du profilé d'étanchéité (02) se rétrécissant dans la direction vers le prolongement de la lèvre d'étanchéité (09), au niveau duquel la lèvre d'étanchéité (09), observée à partir de son extrémité libre (10), converge vers le tracé en courbe fermée.

13. Élément sanitaire selon la revendication 12, **caractérisé en ce que** la paroi (05) se rétrécit autour de 0,5 à 0,8 fois.

14. Élément sanitaire selon l'une quelconque des revendications précédentes, **caractérisé en ce que** l'élastomère du profilé d'étanchéité (02) possède une dureté Shore entre 50 et 70 Shore A.

15. Élément sanitaire selon l'une quelconque des revendications précédentes, **caractérisé en ce que** la face arrière (03) du profilé d'étanchéité (02) est munie d'un traitement de surface sur lequel est appliquée la couche de colle (04).

16. Élément sanitaire selon la revendication 15, **caractérisé en ce que** le traitement de surface est un traitement préalable au gaz et/ou un traitement à la flamme.

17. Élément sanitaire selon l'une quelconque des revendications précédentes, **caractérisé en ce que** la porte s'ouvre vers l'intérieur de la baignoire (14), de telle sorte que lorsque la baignoire (14) contient de l'eau, on pousse contre la surface d'étanchéité (16).

18. Élément sanitaire selon l'une quelconque des revendications précédentes, **caractérisé en ce que** la porte est une porte de douche d'un seul tenant, dont la hauteur s'avance au-dessus du bord (17) de la baignoire.

19. Élément sanitaire selon l'une quelconque des revendications précédentes, **caractérisé en ce que** le profilé d'étanchéité (02) comporte un fil anti-allongement (18) qui s'étend le long du profilé d'étanchéité (02).
